# FASCICULE DE BREVET EUROPEEN

(11) **EP 0 419 353 B1**
(45) Date de publication et mention de la délivrance du brevet: **10.05.1995**
(21) Numéro de dépôt: 90402586.3
(22) Date de dépôt: 19.09.1990
(51) Int. Cl.: H04N 7/00

(54) **Dispositif de décodage de programmes de télévision haute définition**
Einrichtung zur hochauflösenden Fernsehprogramm-Dekodierung
High definition television programmes decoding device

(30) Priorité: 21.09.1989 FR 8912410
(43) Date de publication de la demande: 27.03.1991
(73) Titulaire: FRANCE TELECOM, 75015 Paris (FR); Etablissement Public Télédiffusion de France, 75015 Paris (FR)
(72) Inventeur: Bernard, Philippe, F-35510 Cesson Sevigne (FR)
(74) Mandataire: Fort, Jacques

(56) Documents cités:
- EP-A- 0 322 956
- EP-A- 0 344 846
- FR-A- 2 633 135
- ELECTRONICS & COMMUNICATION ENGINEERING JOURNAL, vol. 1, no. 1, janvier/février 1989, pages 15-22, Londres, GB; P.SARAGA: "Compatible high-definition television"
- CONTRIBUTION TO THE CLUB DE RENNES YOUNG RESEARCHERS' SEMINAR (Les assises des jeunes chercheurs), Cambridge, MA, 9-13 octobre 1988, pages 1-20; F.W.P.VREESWIJK: "HD-MAC coding for broadcasting of high definition television signals"

## Description

L'invention concerne de façon générale les systèmes de diffusion de programmes de télévision à haute définition, dite "TVHD", destinés à fournir une image ayant un nombre de lignes et de points par ligne beaucoup plus élevé que celui correspondant aux normes actuelles.

Il sera souvent question par la suite du projet européen EUREKA EU 95, qui prévoit un système fournissant une image à la fréquence de 50 Hz, ayant 1250 lignes (au lieu de 625 lignes) et un nombre de points par ligne doublé.

Deux problèmes ont été pris en considération dans le choix du système de diffusion.

Le premier problème est celui de la diffusion de programmes de TVHD sur un canal de télévision ayant une largeur insuffisante pour transmettre intégralement tous les pixels de toutes les trames vidéo successives. Ce problème se pose notamment du fait qu'on souhaite diffuser des programmes de TVHD sur un canal de télévision MAC/PAQUETS depuis un satellite.

On a déjà proposé divers procédés de compression d'informations visant à réduire la largeur de bande requise pour l'image TVHD à celle qui est disponible : on pourra se reporter à ce sujet au document du CCIR intitulé "HD-MAC bandwidth reduction coding principles" n° 11/6-2013. La compression est obtenue en utilisant des techniques de sous-échantillonnage spatial et/ou temporel choisies pour obtenir une résolution spatiale maximale et un bon rendu des mouvements ; le récepteur effectue une interpolation entre les points transmis suivant un processus dual du sous-échantillonnage.

Le sous-échantillonnage est précédé d'un préfiltrage ou d'une mise en forme du spectre pour éviter tout repliement spatial ou temporel du spectre, l'interpolation lors du décodage dans chaque récepteur étant précédée ou suivie d'un filtrage inverse de celui qui intervient à l'émission (EP-A-0 316 232).

Le second problème est constitué par la condition que les programmes de TVHD doivent être reçus et restitués, avec une dégradation aussi faible que possible, par les récepteurs de télévision de première génération, ce qui impose des contraintes sur les techniques de sous-échantillonnage et de compensation de mouvement.

Pour que le sous-échantillonnage nécessaire ne dégrade pas la qualité de l'image TVHD de façon excessive, la structure de sous-échantillonnage doit être adaptée à l'activité temporelle du signal vidéo, généralement par sélection séparée entre plusieurs structures pour des blocs rectangulaires de pixels de taille déterminée (par exemple 16 x 16) dans l'image.

En d'autres termes, on prévoit différentes structures de sous-échantillonnage et on fait choix de celle de ces structures qui assure le meilleur rendu possible, suivant l'activité temporelle de la fraction d'image représentée par le bloc de pixels. Mais ces structures ne sont en général pas superposables spatialement et/ou temporellement, ce qui crée un nouveau problème lors de la restitution.

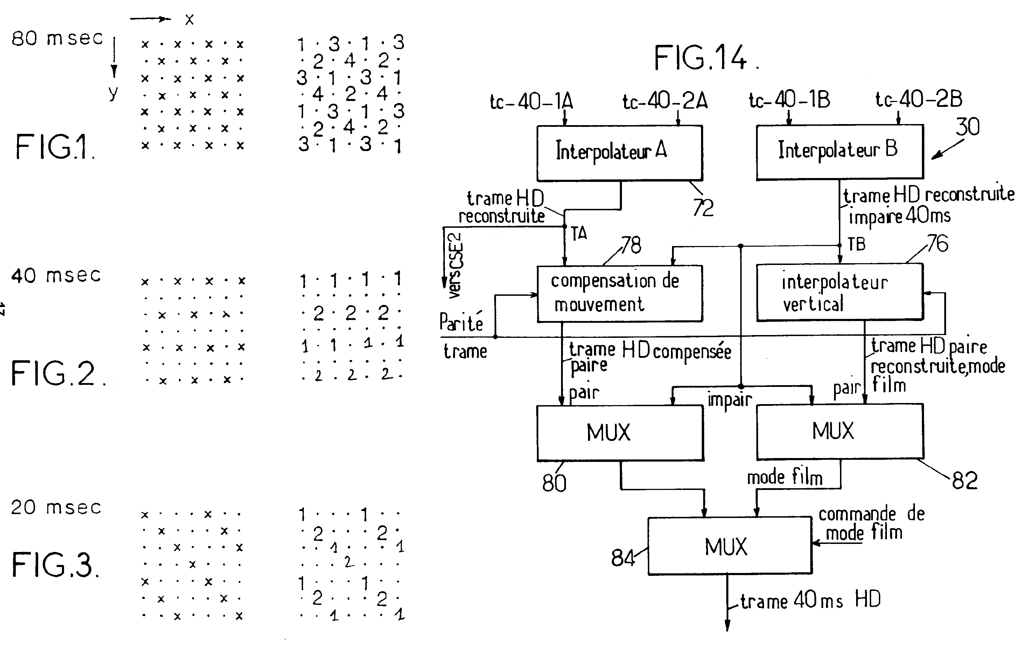

A titre d'exemple non limitatif de structures de sous-échantillonnage utilisables, on peut citer les trois structures prévues pour les échantillons de luminance par la norme HD-MAC où chaque image ("frame" en anglais) est à 1250 lignes avec entrelacement de deux trames ("fields" en anglais).
1. Une première structure, dite de type 3, ou en mode 80 ms, peut être qualifiée "quinconce ligne sur quatre trames" et divise par deux la quantité d'information à transmettre. Elle est schématisée sur la Figure 1 : les échantillons x retenus dans une même image, disposés en quinconce dans l'image, sont transmis en quatre trames successives de transmission t1, t2, t3, T4 et indiqués respectivement par les chiffres 1, 2, 3, 4.
   Cette structure est utilisée pour les zones à faible activité temporelle de l'image, c'est-à-dire dans les zones où les modifications sont faibles d'une image à la suivante. Elle utilise la redondance temporelle d'une image fixe ou faiblement mobile pour étaler, sur deux images de transmission, des informations d'une même image à haute définition.
2. Une autre structure, dite de type 1, ou en mode 20 ms, retient uniquement un point sur deux de la structure de type 3. Comme le montre la Figure 3, les points x retenus sont transmis sur les trames de transmission t1 et t2. Ils sont transmis de nouveau sur les trames t3 et t4.
   Cette structure diminue la résolution spatiale de l'image, mais s'adapte mieux à des images à forte activité temporelle puisque la cadence d'exploration temporelle est multipliée par quatre.
3. Une autre structure encore, dite de type 2, ou en mode 40 ms, peut être dénommée "quinconce ligne sur les lignes d'analyse impaires" à saut de trame (ou "field skip"). La transmission à saut de trame s'effectue par étalement temporel de chaque trame d'analyse à haute définition impaire T1, et d'elle seule, sur deux trames de transmission t1, t2 ou t3, t4. Cette structure peut par exemple être utilisée pour des zones de l'image présentant une activité compensable dans le sens du mouvement par des techniques de filtrage non-linéaire impliquant la transmission d'un vecteur indiquant la direction et l'amplitude du mouvement.

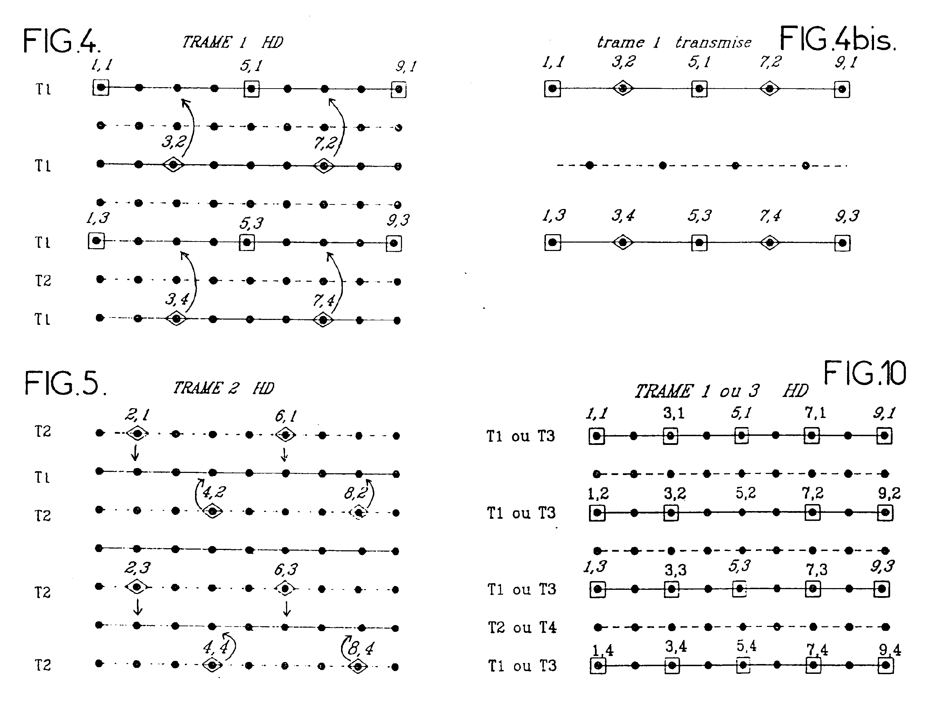

Pour réduire le nombre de lignes nécessaire à la diffusion, on utilise des techniques de brassage vertical ou "shuffling" dont le principe est déjà connu et dont il sera de nouveau question plus loin. Ce réarrangement peut notamment, lorsque les structures utilisées et les points retenus, avant acheminement dans le canal à 625 lignes, sont ceux définis plus haut, être tel que représenté sur les Figures 4 à 10.

Les Figures 4, 5, 6 et 7 correspondent respectivement au réarrangement par brassage vertical pour quatre trames haute définition successives T1, T2, T3 et T4 représentées en structure de type 3, c'est-à-dire en mode 80 ms. Les points noirs représentent tous les échantillons des trames haute définition. Les carrés et les losanges indiquent respectivement les échantillons transmis sans arrangement et avec réarrangement. Les deux chiffres affectés à chaque point transmis indiquent respectivement le numéro d'ordre de l'échantillon dans la ligne (direction x) et le numéro d'ordre de la ligne dans la trame d'analyse à haute définition (direction y). Les transferts de ligne à ligne sont indiqués par des flèches. La répartition des points transmis sur la trame t1, et elle seule, est donnée sur la Figure 4bis, à titre d'exemple.

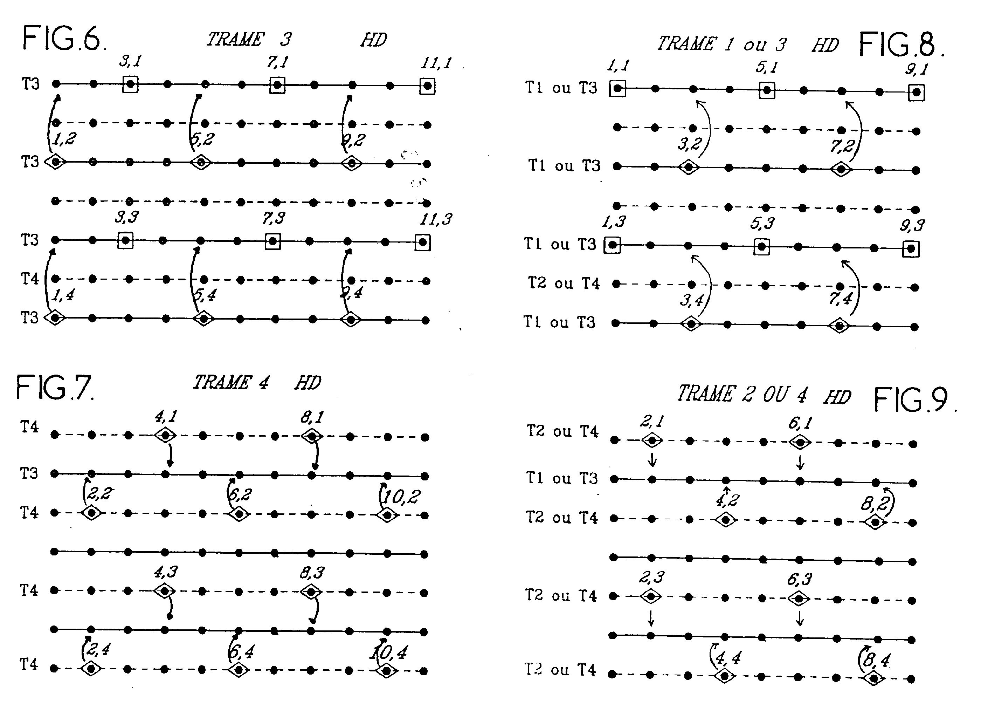

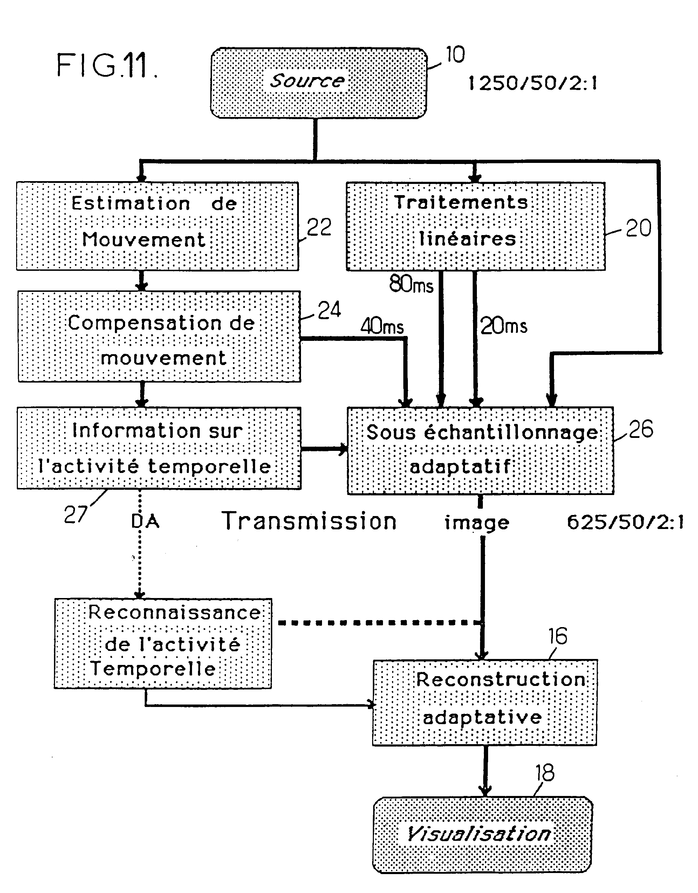

Les Figures 8 et 9 montrent le réarrangement des points transmis dans le cas de la structure de type 1 (20 ms), respectivement pour une trame haute définition impaire T1 ou T3 et pour une trame haute définition paire T2 ou T4. Tous les échantillons des trames paires sont réarrangés, tandis que seuls les échantillons pairs des trames impaires sont réarrangés.

Enfin, la Figure 10 correspond à la structure de type 2 où les trames haute définition 2 et 4 ne sont pas utilisées) ; elle montre qu'il n'y a aucun réarrangement. Les points 1,1 ; 3,1 ; 5,1 ; ... et 1,3 ; 3,3 ;... sont transmis sur la trame t1 ou t3 ; les autres points sont transmis sur la trame t2 ou t4.

Les Figures 4 à 10 font apparaître que les trois structures ne sont superposables ni spatialement, ni temporellement :
- du point de vue spatial, les échantillons de la structure peuvent être en quinconce sur l'image (cas de la structure 1), ou sur la trame (cas de la structure 2) ;
- du point de vue temporel, la structure 1 par exemple est échantillonnée à 50 Hz alors que la structure 2 est échantillonnée à 25 Hz (mode dit "film").

Pour faciliter la compréhension de la suite du texte, il peut être utile de donner un schéma de principe de la séquence d'opérations lors du codage et du décodage haute définition. On voit sur la Figure 11 que l'image source 10 est soumise à deux traitements (80 ms et 20 ms) linéaires de préfiltrage en 20. Parallèlement, l'image est soumise à estimation de mouvements, c'est-à-dire d'activité temporelle, en 22, et à une opération de traitement non linéaire de compensation de mouvements en 24. Un bloc 26 de sous-échantillonnage adaptatif détermine a posteriori, par comparaison d'un bloc d'échantillons (en général 16 x 16) de l'image d'origine avec les images fournies par les trois voies qui y aboutissent, laquelle des trois voies doit être utilisée pour l'émission.

Parallèlement, un bloc 27 d'information sur l'activité spatio-temporelle incorpore à des données d'assistance DA la valeur des vecteurs mouvement nécessaires à la reconstruction ainsi qu'une information de commutation indiquant la nature du traitement retenu. Ces données d'assistance sont transmises avec un débit qui ne dépasse pas 1,1 Mbit/s.

Le récepteur reçoit donc non seulement les trames de transmission t, mais aussi les données DA qui contiennent une information de commutation indiquant, pour chaque bloc prédéterminé d'échantillons, quelle voie de traitement a été utilisée lors du codage ainsi que, le cas échéant, la valeur du vecteur mouvement en chaque point traité, dans le cas où la voie a donné lieu à compensation (cas où elle met en oeuvre la structure 2 et, quelquefois également, la structure 1 ou même 3).

Le décodeur haute définition 16 doit restituer intégralement tous les points des trames d'analyse haute définition à partir des seuls échantillons disponibles, dans une structure qui peut différer de bloc à bloc dans une même image (ce que l'on peut considérer comme une rupture de mode spatiale) et d'une image à la suivante, ce que l'on peut considérer comme une rupture de mode temporelle. Plusieurs problèmes se posent donc pour la reconstitution de l'image.
1. L'interpolation entre les points disponibles ne peut se faire selon un modèle unique. En effet, l'interpolation à l'intérieur d'un bloc ayant une structure donnée ne peut se faire directement aux frontières de ce bloc lorsqu'il est entouré par des blocs ayant une structure différente, car dans les blocs voisins manquent des échantillons en phase avec la structure de base du bloc considéré.
2. Il n'y a pas d'injectivité entre les échantillons filtrés provenant de l'analyse à haute définition et les échantillons à transmettre ; on n'effectue un brassage vertical ou "réarrangement" que pour certaines structures. Le décodeur doit être prévu pour compenser les décalages spatiaux, ce qui implique une manipulation des échantillons représentant une même image haute définition et appartenant à plusieurs trames de transmission, et temporels.
3. En cas de rupture de mode temporelle, il est nécessaire de reconstituer une image haute définition représentée par des trames de transmission résultant d'une analyse suivant deux modes différents. Un cas typique de cette situation est la rupture de mode 80 ms : lorsqu'une période de 80 ms s'achève et est suivie par le mode 20 ou 40 ms, il manque une ou deux trames de type 3 (80 ms) et il est nécessaire de reconstituer, à partir des informations disponibles, quatre trames de transmission en mode 80 ms.

A première vue, ces problèmes ne peuvent être résolus de façon rigoureuse qu'à condition de prévoir, dans le décodeur, une capacité de mémoire telle que l'on dispose simultanément, en même temps que d'une trame de transmission courante, d'au moins les trois trames qui précèdent et les trois trames qui suivent.

On connaît déjà des décodeurs conformes au préambule de la revendication 1, qui permettent la reconstitution des trames HD au prix d'une capacité de mémoire élevée (EP-A-322956).

L'invention vise à fournir un décodeur mettant en oeuvre une technique d'interpolation adaptative aux structures de sous-échantillonnage utilisées, réalisant un compromis optimum entre la qualité de l'image haute définition reconstituée et la complexité de réalisation matérielle du décodeur et suffisamment souple pour supporter des modifications éventuelles du mode de codage ; pour cela, le décodeur doit calculer les échantillons manquants au voisinage d'un bloc pour permettre une interpolation débordant sur les blocs adjacents.

A cet effet, l'invention propose un dispositif de décodage conforme à la revendication 1.

Une telle constitution peut être qualifiée de "semi-cascadée". Par rapport à une architecture de décodeur comportant des interpolateurs placés tous en parallèle, elle présente l'avantage de faciliter les conversions de structure d'échantillonnage ; par rapport à une architecture entièrement cascadée, avec des interpolations en cascade pour chaque branche, la complexité matérielle est très réduite.

Les moyens de conversion de structure d'échantillonnage ainsi constitués fournissent à des interpolateurs supplémentaires, cette fois uniques pour chaque structure, la totalité des échantillons, correctement positionnés.

Le multiplexage des trames initiales transmises et des trames à structure convertie, que l'on peut qualifier de "rafraichissement", et les conversions de structure s'effectuent selon un processus adaptatif à l'information fournie par les données d'assistance ou encore suivant le mode d'interpolation.

L'invention sera mieux comprise à la lecture de la description qui suit d'un mode particulier de réalisation, donné à titre d'exemple non limitatif. La description se réfère aux dessins qui l'accompagnent, dans lesquels :
- les Figures 1, 2 et 3, déjà mentionnées, montrent la répartition des échantillons transmis et leur distribution entre les trames de transmission, respectivement pour les structures de type 1, 2 et 3 ;
- les Figures 4, 4bis et 5-10, déjà mentionnées, montrent le réarrangement effectué sur les échantillons avant transmission, pour les structures 1, 2 et 3 ;
- la Figure 11 est un schéma fonctionnel d'une chaîne de codage et d'une chaîne de décodage HD-MAC ;
- la Figure 12 est un schéma de principe montrant une architecture possible du décodeur haute définition 16 de la Figure 11, suivant un mode particulier de réalisation de l'invention ;
- la Figure 13 est un schéma synoptique du premier convertisseur de structure d'échantillonage du décodeur de la Figure 12 ;
- la Figure 14 est un schéma synoptique montant une constitution possible du circuit interpolateur de reconstruction en mode 40 ms du décodeur de la Figure 12 ;
- la Figure 15 est un schéma montrant la façon dont s'effectue la compensation de mouvement en mode 40 ms ;
- la Figure 16 est un schéma montrant les notations utilisées pour désigner les signaux dans le décodeur de la Figure 12 ;
- la Figure 17 est un schéma de principe destiné à montrer les fonctions du second convertisseur de structure d'échantillonnage du décodeur de la Figure 12 ;
- la Figure 18 est un schéma indiquant les notations utilisées pour désigner les signaux dans l'ensemble de reconstitution de trames haute définition du décodeur de la Figure 12 ;
- la Figure 19 est un schéma synoptique destiné à montrer la façon dont s'effectue la conversion du mode 80 ms vers le mode 20 ms dans le premier convertisseur de structure d'échantillonnage du décodeur de la Figure 12 ;
- les Figures 20 et 21 constituent un schéma synoptique montrant une constitution possible du sous-ensemble convertisseur vers le mode 20 ms du premier convertisseur de structure d'échantillonnage de la Figure 13 ;
- la Figure 22, similaire aux Figures 20 et 21, est un schéma synoptique d'une constitution possible d'un des composants des blocs appartenant au sous-ensemble de conversion du mode 80 ms vers le mode 40 ms dans le convertisseur de structures d'échantillonnage de la Figure 13 ;

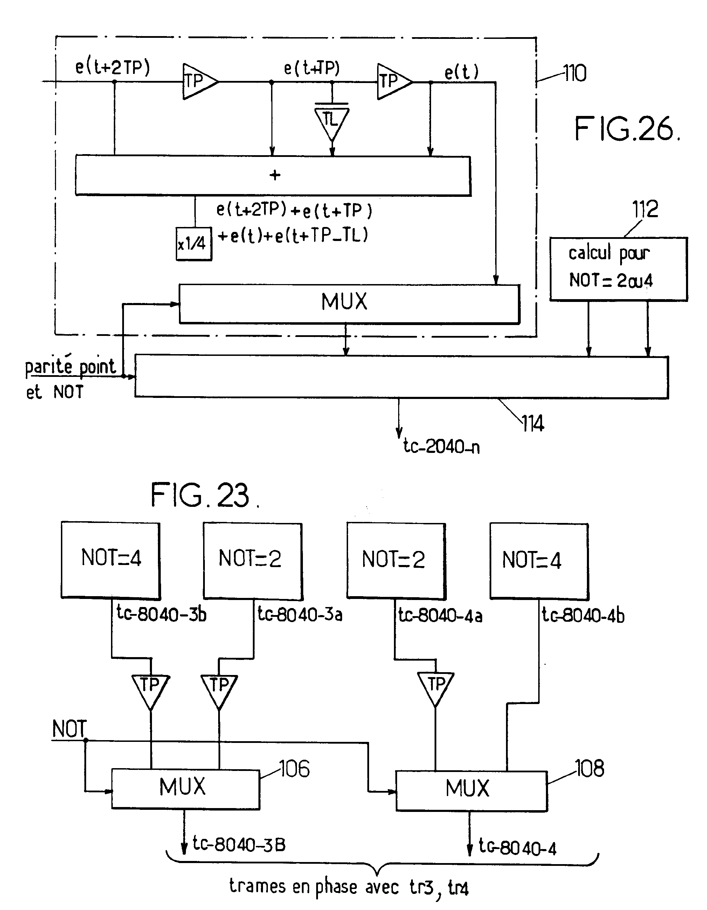

- la Figure 23 est un schéma synoptique de principe d'une autre fraction de bloc de conversion de mode 80 ms en mode 40 ms ;
- les Figures 24 et 25 indiquent, sous forme non normalisée, des coefficients de pondération utilisables pour la production de trames en phase temporelle lors de la conversion du mode 80 ms vers le mode 40 ms ;
- la Figure 26, similaire à la Figure 23, est un synoptique de principe montrant une constitution possible d'interpolateur utilisable pour la conversion du mode 20 ms vers le mode 40 ms dans le premier convertisseur de structure d'échantillonnage ;
- les Figures 27, 28 et 29 sont des schémas indiquant des coefficients de pondération utilisables pour le filtrage par interpolation, permettant de traiter les ruptures de mode 80 ms ;
- la Figure 30 est un synoptique de principe montrant le multiplexage des signaux de sortie en vue de la formation d'une image complète en mode 80 ms.

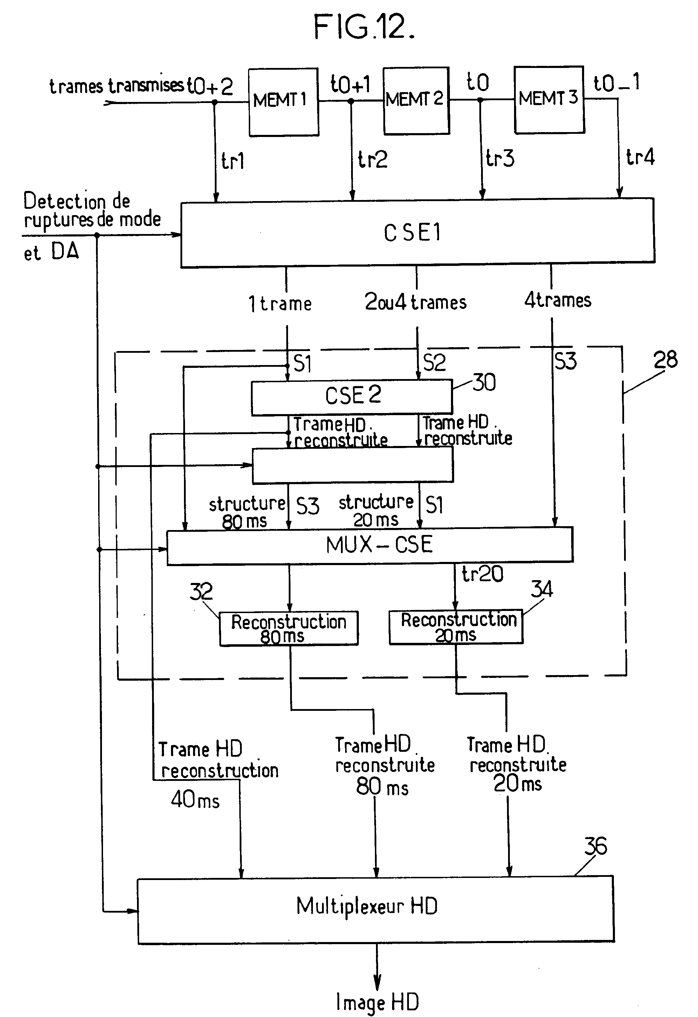

Le décodeur dont la constitution de principe est montrée en Figure 12 est conçu pour reconstituer l'ensemble des échantillons de luminance d'une trame vidéo haute définition, en ne mettant en oeuvre que trois mémoires de trame transmises, avec échantillonnage à 13,5 MHz dans le cas, qui sera seul envisagé plus loin, du projet EUREKA EU 95. On verra plus loin qu'une architecture similaire, mais plus simple, peut être prévue pour traiter les échantillons de chrominance échantillonnés à 6,75 MHz, en séquentiel de ligne, c'est-à-dire avec transmission pour chaque ligne d'une composante de chrominance seulement sur deux.

Le décodeur est placé, dans le récepteur, en aval du démultiplexeur qui sélectionne les échantillons de luminance, les échantillons de chrominance étant traités séparément. Il comporte trois mémoires de trame MEM T1, MEM T2 et MEM T3 placées en cascade et ayant chacune la capacité requise pour stocker les échantillons d'une trame de transmission complète. Leur taille sera supposée être de 16 points et 8 lignes par trame de transmission (ce qui correspond à des blocs de 16 x 16 sur l'image), mais cette taille peut être quelconque modulo 4.

Les blocs transmis peuvent être codés différemment les uns des autres et correspondre à une quelconque des structures de type 1, 2 et 3. La reconstitution par interpolation des échantillons d'un bloc codé dans une structure donnée nécessite de connaître des échantillons adjacents dans les blocs voisins, présentés dans la même structure d'échantillonnage.

Pour cela, le décodeur comporte un premier convertisseur de structure d'échantillonnage CSE1, relié aux entrées et sorties des trois mémoires de trame MEM T, dont le rôle est de fournir toutes les trames de transmission présentées en totalité suivant les trois structures.

Dans ce qui suit, on appellera "trame courante" celle des trames, en mémoire MEM T, qui est en phase avec la trame haute définition à reconstituer. Cette trame, désignée tr3, est transmise à un instant t0 et apparaît en sortie de la mémoire MEM T2. On dispose donc, en même temps que de la trame tr3, des trames :
- tr1, qui est la première trame disponible et est celle du signal source à l'instant t0 + 2 durées de trames ;
- tr2, qui est la trame correspondant à la première sortie de la mémoire de trame, et est celle du signal source à l'instant t0 + 1 ;
- tr4, qui est la trame correspondant à la sortie de la mémoire MEM T3 et est celle du signal source à l'instant t0 - 1.

CSE1 convertit directement, sans interpolation, les trames reçues en :
- une trame en structure sous-échantillonnée S1, pour laquelle la reconstitution ne pose pas de problème car il y a toujours concordance de phase temporelle entre les trames transmises alternées t1 et t2 et les trames vidéo d'analyse T1 et T2 ;
- deux ou quatre trames en structure sous-échantillonnée S2, pour laquelle chacune des trames impaires vidéo T1 et T3 de l'image source sera reconstituée à partir de deux trames de transmission successives t1-t2 ou t3-t4 ;
- quatre trames en structure sous-échantillonnée S3, qui est celle qui pose le plus de problèmes.

Les trames présentées suivant les trois structures sous-échantillonnées provenant de CSE1 sont appliquées à un ensemble de reconstruction de trames haute définition 28 qui comporte, disposés en cascade :
- un circuit interpolateur 30 destiné à reconstruire la totalité de la trame haute définition, en mode 40 ms, c'est-à-dire en complétant la structure S2 par les points manquants ;
- un second convertisseur de structure d'échantillonnage CSE2 qui effectue un sous-échantillonnage de la trame haute définition reconstruite en mode 40 ms, fournie par le circuit interpolateur 30, pour fournir des échantillons supplémentaires appartenant à quatre trames en mode 80 ms (ou S3), et une trame en mode 20 ms (ou S1) ;
- un multiplexeur 31 qui, en fonction des informations fournies par les données d'assistance DA et des détections de rupture de mode, sélectionne soit les échantillons provenant de CSE1, soit les échantillons provenant de CSE2, mais relatifs uniquement aux modes 20 et 80 ms (structures S1 et S3) ; et
- un jeu de deux interpolateurs 32 et 34 travaillant en parallèle et utilisant les signaux sélectionnés pour reconstituer l'intégralité des trames haute définition, en mode 80 ms et 20 ms respectivement, à partir des échantillons reçus du multiplexeur 31.

Seuls les signaux fournis par le premier convertisseur CSE1 sont utilisés pour la reconstitution des trames haute définition en mode 40 ms, tandis que la reconstitution des modes 20 et 80 ms est effectuée à partir des signaux issus à la fois de CSE1 et CSE2.

Les trois trames haute définition reconstruites sont appliquées sur les trois entrées d'un multiplexeur haute définition 36 qui sélectionne, pour chaque bloc, les échantillons correspondant au mode d'analyse à l'émission, identifié par les données d'assistance.

On décrira maintenant une constitution possible des différents composants montrés sur la Figure 12.

### Convertisseur de structure d'échantillonnage CSE1

Comme on l'a indiqué plus haut, le convertisseur CSE1 doit générer :
- deux ou quatre trames en structure S2,
- quatre trames en structure S3,
- une trame en structure S1.

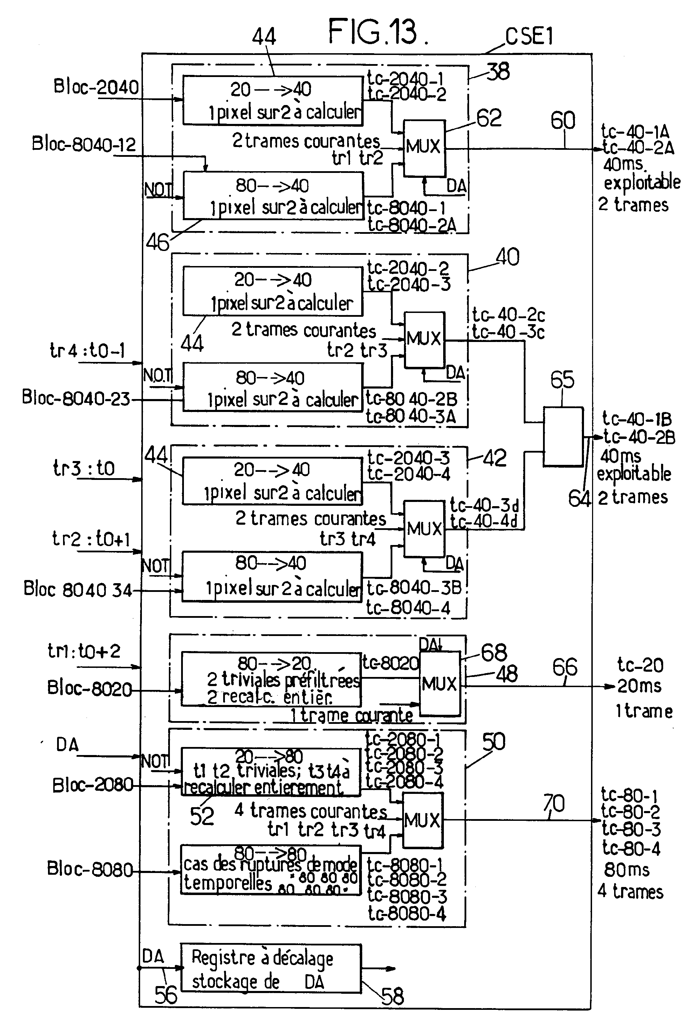

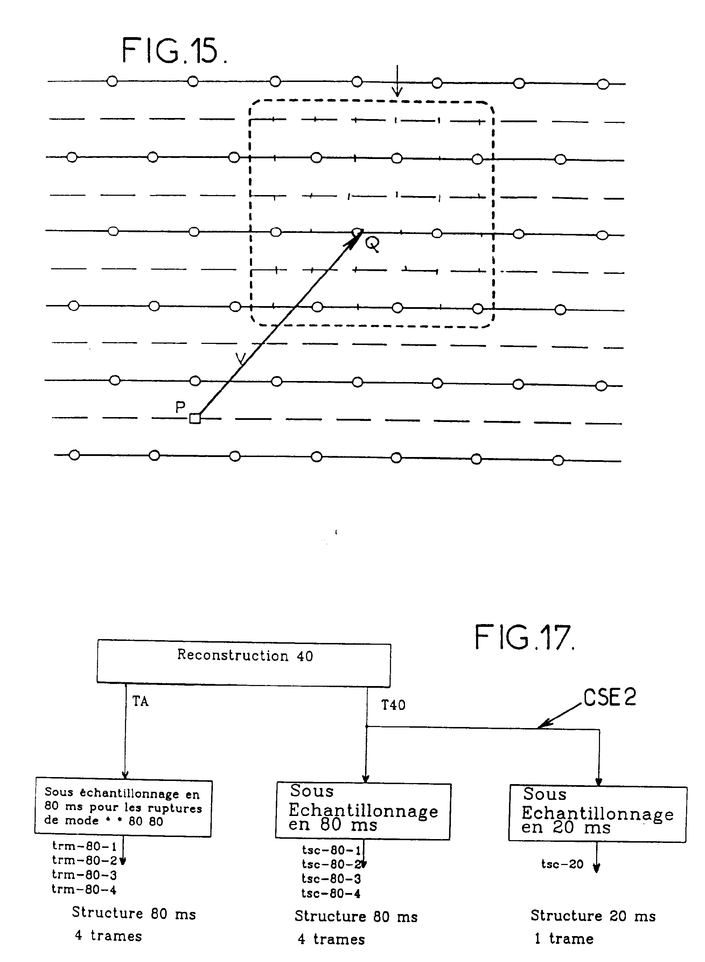

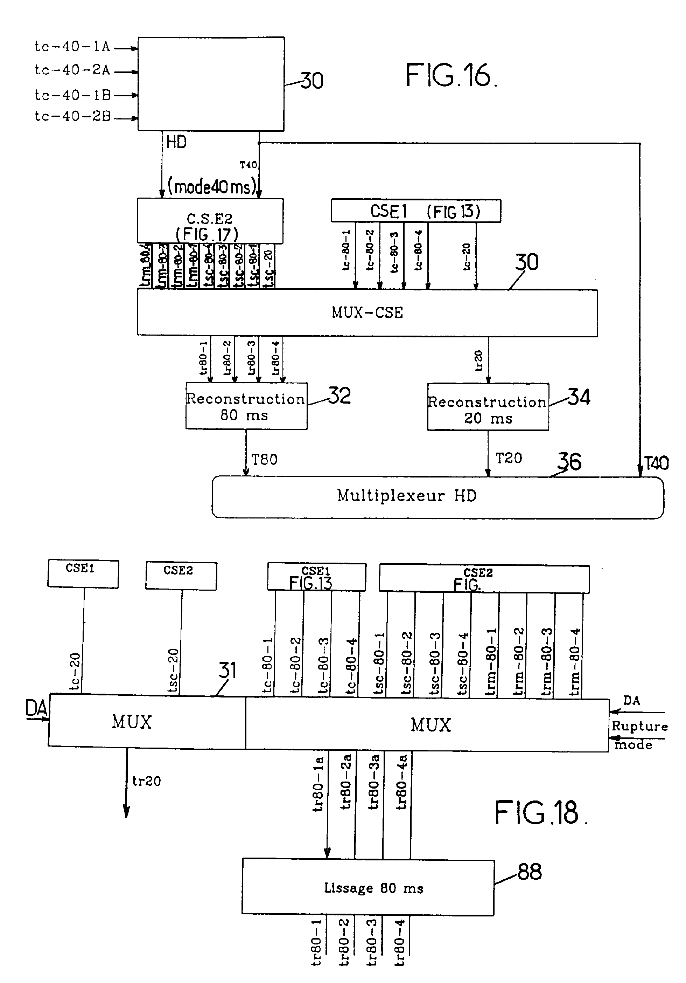

Le synoptique de la Figure 13 montre une constitution possible du convertisseur CSE1. L'architecture peut être considérée comme constituée de plusieurs sous-ensembles.
- Trois sous-ensembles convertisseurs 38, 40 et 42 vers le mode 40 ms contiennent chacun un convertisseur du mode 20 ms vers le mode 40 ms et un convertisseur du mode 80 ms vers le mode 40 ms. Tous les convertisseurs 20 → 40 (c'est-à-dire du mode 20 ms vers le mode 40 ms), référencés 44, sont identiques. Par contre, les convertisseurs 80 → 40, désignés par 46, sont mutuellement différents dans les convertisseurs 38, 40 et 42 vers le mode 40 ms.
- Un sous-ensemble convertisseur 48 vers le mode 20 ms ; et
- Un sous-ensemble convertisseur 50 vers le mode 80 ms, ce dernier ayant un convertisseur 20 → 80, désigné par 52, et un convertisseur 80 → 80 désigné par 54, qui intervient dans le cas de ruptures temporelles de mode 80 ms.

CSE1 reçoit également, sur une entrée 56, les données d'assistance qui sont stockées dans un registre à décalage 58 fournissant un retard correspondant aux trames de traitement.

Une constitution possible des différents sous-ensembles du convertisseur CSE1 sera décrite plus loin. Leurs fonctions sont les suivantes :
- Le sous-ensemble 38 fournit, sur une sortie 60, des trames désignées par tc-40-1A et tc-40-2A de type 40 ms, destinées à attaquer un interpolateur 72 qualifié de "type A" dans le circuit interpolateur 30 (Figure 14), élaborées soit par le convertisseur 44 à partir d'un bloc en mode 20 ms, soit par le convertisseur 46 à partir du mode 80 ms, le choix entre les trames fournies par les convertisseurs 44 et 46 et les trames courantes étant effectué par un multiplexeur 62 commandé par les données d'assistance DA.
- Les sous-ensembles 40 et 42 sont destinés à fournir, sur une sortie 64, à travers un multiplexeur de sélection 65, les blocs en trames de type 40 ms tc-40-1B et tc-40-2B destinées à un interpolateur 74 qualifié de "type B" dans le circuit interpolateur 30 (Figure 14).

Le sous-ensemble 48 vers le mode 20 ms fournit des trames tc-20 en mode 20 ms, attaquant le multiplexeur 30 : il comprend, en plus d'un bloc 80 → 20, un multiplexeur 68 qui, suivant les données d'assistance, émet vers la sortie 66, soit la trame courante, soit la sortie du convertisseur 80 → 20.

Enfin, le sous-ensemble 50 de conversion vers le mode 80 ms fournit, sur une sortie 70, quatre trames successives en mode 80 ms.

A l'intérieur de chacun des sous-ensembles 38, 40, 42, 48 et 50, les signaux internes ont été indiqués en faisant suivre l'indication tc d'un nombre de quatre chiffres indiquant le mode d'entrée et le mode converti (2080 désignant par exemple une trame issue d'une conversion de mode 20 ms vers le mode 80 ms). Un dernier chiffre indique la trame source d'entrée avec laquelle la trame convertie est en phase temporellement : la notation tc-2080-1 indique par exemple une trame convertie qui est en phase temporelle avec la trame source d'entrée tr1.

### Circuit interpolateur de reconstruction de trame HD en mode 40 ms

Le circuit interpolateur 30 peut avoir la constitution de principe montrée en Figure 14, qui permet de traiter les différents cas qui peuvent se présenter, suivant que le numéro d'ordre NOT de la trame courante tr3 est impair ou pair.

Le circuit interpolateur 30 comprend un interpolateur 72 de type A et un interpolateur spatial 74 de type B.

L'interpolateur 74 permet de reconstituer une trame haute définition à partir de deux trames successives tc-40-1B et tc-40-2B, dans le cas où le numéro de trame courante NOT est impair.

Dans le cas où NOT est pair :
- lorsqu'on est en mode "film", c'est-à-dire en cas d'analyse à 25 Hz, le même interpolateur 74 est utilisé pour produire, par interpolation spatiale, une trame haute définition qui est ensuite interpolée dans la direction verticale par un interpolateur 76 pour fournir une trame haute définition paire reconstruite.
- lorsqu'on n'est pas en mode film, c'est-à-dire lorsque l'analyse est à 50 Hz, on met en oeuvre une technique de compensation de mouvement. On pourra trouver une description complète d'une telle technique dans la demande de brevet FR n° 88 08096 déposée le 16 juin 1988. Mais, pour les besoins de la présente description, il suffit d'indications sommaires sur le mode de compensation de mouvement qui permet d'obtenir une trame paire à partir de deux trames haute définition 40 ms de NOT impair, obtenue grâce aux deux interpolateurs 72 et 74. Le circuit 78 de compensation de mouvement et l'interpolateur vertical 76 sont mis en oeuvre par un signal de parité de trame élaboré de façon classique.

La constitution du circuit de compensation de mouvement n'ayant pas de liaison directe avec l'invention ne sera pas décrite ici : il suffit de noter que ce circuit 78 génère une trame haute définition compensée paire à partir d'une trame ou de deux trames impaires haute définition adjacentes. La Figure 15 montre, à titre d'exemple, la reconstitution d'un échantillon P à calculer à partir du vecteur vitesse V fourni par les données d'assistance et du point Q constituant la projection de P. Le cadre en tirets indique l'ouverturede l'interpolateur. Les lignes des trames impaires et paires sont respectivement indiquées par des lignes en trait plein et en tirets.

De façon plus générale, la compensation de mouvement peut s'effectuer de deux façon différentes, l'une et l'autre compatibles avec la mise en oeuvre de l'invention. Le choix entre elles sera fait en fonction du degré de complexité acceptable et du caractère plus ou moins complet de la compensation.

Une première solution consiste à effectuer une projection, dans le sens du mouvement, de la trame impaire précédente sur la trame paire courante : cette solution présente l'avantage de ne nécessiter aucune gestion de rupture de mode 40 ms.

L'autre solution consiste à effectuer un filtrage dans le sens du mouvement, ce qui a l'avantage de mieux se prêter à une estimation de mouvement du type "à correspondance de blocs" sur les deux trames adjacentes. Ce filtrage revient à faire la moyenne des deux trames impaires adjacentes, projetées dans le sens du mouvement sur la trame paire courante.

Si ce second mode de compensation est adopté, les ruptures de mode du type * * 40 40 se gère de la façon suivante : au lieu de faire la moyenne avec des coefficients de pondération égaux, on utilise un jeu de coefficients privilégiant la trame impaire adjacente qui est en mode 40 ms. On peut notamment utiliser les coefficients 0,25 et 0,75.

Pour être idéal, un traitement devrait tenir compte des ruptures de mode dans le sens du mouvement.

Le circuit interpolateur 30 comporte encore trois multiplexeurs 80, 82 et 84 qui permettent de sélectionner la trame 40 ms haute définition à retenir.

### Convertisseur de structure d'échantillonnage CSE2

Les notations utilisées pour décrire les fonctions du convertisseur CSE2 sont celles indiquées en Figure 16. Le convertisseur CSE2 reçoit en entrée :
- les trames haute définition reconstruites en mode 40 ms, désignées par T40 .
- un résultat intermédiaire de l'interpolation effectuée dans le circuit interpolateur 30 et correspondant à l'interpolation de type A, désigné par TA sur la Figure 14.

Le convertisseur CSE2 doit fournir, sur ses sorties, des signaux correspondant :
- à une rupture de mode 80 ms, de la forme trm-80-n (où n peut prendre la valeur 1, 2, 3 ou 4),
- aux signaux en mode 80 ms échantillonnés sur le résultat de la reconstruction en mode 40 ms effectuée par le circuit interpolateur 30, ce qui correspond à un montage semi-cascadé, ces signaux étant désignés par tsc-80-n (avec n = 1, 2 , 3 ou 4),
- à un signal 20 ms échantillonné à partir du résultat de la reconstruction fournie par le circuit interpolateur, encore suivant un montage semi-cascadé.

Du fait que CSE2 n'a pour fonction que de fournir des signaux convertis soit en mode 80 ms, soit en mode 20 ms à partir de la trame 40 ms haute définition fournie par le circuit interpolateur 30, sa constitution est relativement simple. Elle peut être celle montrée en Figure 17.

Il faut cependant noter que CSE2 fournit, en plus des signaux qui semblent strictement nécessaires, quatre trames trm-80-n en mode 80 ms, qui permettent de gérer la rupture de mode 80 ms du type **8080 (deux premières trames manquantes). On verra plus loin que, pour cette configuration, on utilise le résultat fourni par le circuit interpolateur 30 qui opère sur des instants en phase avec tr1 et tr2 pour fournir quatre trames en mode 80 ms constituées d'échantillons peu affectés d'erreur. Cela revient à échantillonner en structure de type 3 sur une image dont le contenu fréquentiel est assimilable à celui du mode 40 ms.

### Multiplexeur de structures d'échantillonnage

Les fonctions du multiplexeur 31 apparaissent sur la Figure 18. Ce multiplexeur doit :
- multiplexer les deux signaux en mode 20 ms tc-20 et tsc-20 provenant respectivement de CSE1 et de CSE2 pour fournir la trame tr20 qui attaque l'interpolateur 34 de génération de la trame haute définition complète reconstruite en mode 20 ms, en fonction des données d'assistance ;
- multiplexer, en fonction des données d'assistance et des ruptures de mode 80 ms, les trois jeux de quatre signaux en mode 80 ms pour fournir quatre trames en mode 80 ms successives au circuit interpolateur 32 de reconstruction d'une trame complète haute définition en mode 80 ms.

La Figure 18 montre également un circuit de lissage 88 qui a pour but d'atténuer le risque de papillottement de l'image lors des ruptures de mode 80 ms (la cessation de ce mode diminuant la résolution spatiale). Le lissage consiste en un filtrage sur la dernière trame avant passage en mode 80 ms ou la dernière trame en mode 80 ms avant retour à un autre mode, qui peut être effectué par une simple opération de moyenne pondérée sur les échantillons correspondants de la dernière trame à partir des points adjacents.

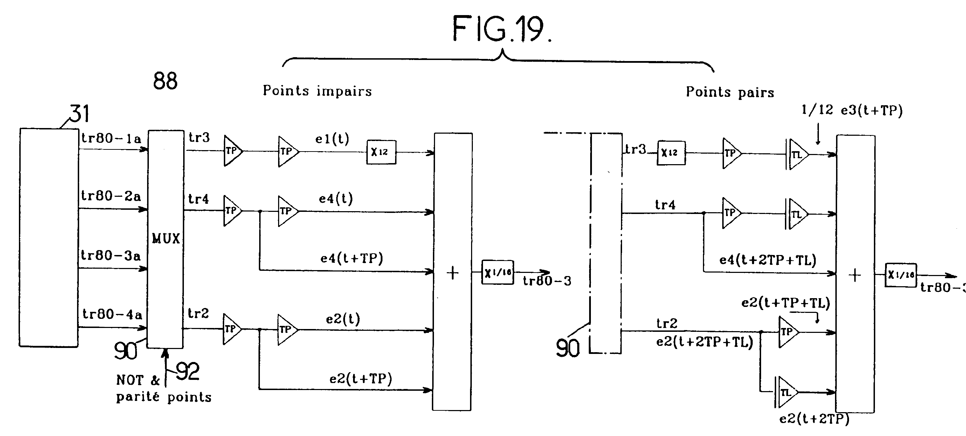

Le circuit de lissage 88 peut avoir la constitution de principe montrée en Figure 19, en ce qui concerne les trames ayant un NOT impair, pour les points impairs (partie gauche de la Figure) et pour les points pairs (partie droite de la Figure). Le lissage fait intervenir le point courant et quatre points appartenant à deux autres trames en mode 80 ms. Un multiplexeur 90, dont l'entrée de commande 92 reçoit le numéro d'ordre de trame et une indication de parité de points, commute un circuit constitué d'éléments de retard et de multiplieurs. Dans l'exemple représenté sur la Figure 9, le poids affecté au point courant est de 12, tandis que le poids affecté à chacun des points adjacents sur la trame 80 ms déjà reconstituée est de 1 seulement.

Les notations ci-après sont utilisées sur les Figures 19 et suivantes :
- Tp :: retard égal à la durée d'un point transmis, c'est-à-dire 75 ns.
- T1 :: retard égal à la durée d'une ligne transmise, c'est-à-dire 64 »s.
- Tf :: retard égal à la durée d'une trame transmise, c'est-à-dire 20 ms.

Les éléments fournissant un retard de transmission égal à Tp, T1, Tf et Tp+T1 sont indiqués par un cadre contenant la notation correspondante. Ils ont un rythme de fonctionnement égal à celui de la transmission des échantillons.

### Interpolateurs 32 et 34

Les interpolateurs de reconstruction 32 et 34, respectivement destinés à reconstituer des trames en mode 80 ms et en mode 20 ms, chaque fois par interpolation, peuvent avoir une constitution relativement classique et, pour cette raison, ne seront pas décrits en détail. Ils sont constitués par plusieurs branches ayant des éléments de retard et des additionneurs, un multiplexeur étant prévu pour diriger alternativement les échantillons pairs et impairs vers le multiplexeur haute définition 36. Dans l'interpolateur 32 de mode 80 ms, quatre trames tr 80-1,... tr 80-4 converties en mode 80 ms et provenant d'un multiplexeur 30 sont utilisées pour générer une image haute définition dont un point sur deux manque, et les points manquants sont calculés ; l'ouverture du filtre peut être de 7 x 7 points de l'image haute définition.

Dans l'interpolateur 34 en mode 20 ms, la trame courante échantillonnée en structure 1 (mode 20 ms) est appliquée à l'entrée ; un point sur quatre de la trame haute définition finale est donc disponible. Tous les points sont calculés par interpolation à l'aide de filtres ayant par exemple une ouverture de 9 x 9. Les filtres comportent essentiellement des éléments de retard et des additionneurs, alimentés par un registre permettant de disposer des 360 points homologues de quatre lignes consécutives.

On décrira maintenant de façon plus complète une constitution possible des composants importants et/ou originaux des circuits énumérés ci-dessus et des modes de filtrage qu'ils mettent en oeuvre.

### Composants de CSE1

### Sous-ensemble convertisseur vers le mode 20 ms

Le convertisseur 48 vers le mode 20 ms n'a qu'à effectuer la conversion depuis la structure de type 3 (mode 80 ms), car les blocs d'échantillons en mode 40 ms sont traités par CSE2, du fait du montage semi-cascadé. Si donc les échantillons d'un bloc sont en mode 20 ou 40 ms, ces échantillons sont transmis à CSE2 tels quels, par le multiplexeur 68.

Au contraire, si les échantillons d'un bloc sont en mode 80 ms, le convertisseur 48 doit générer des échantillons nouveaux.

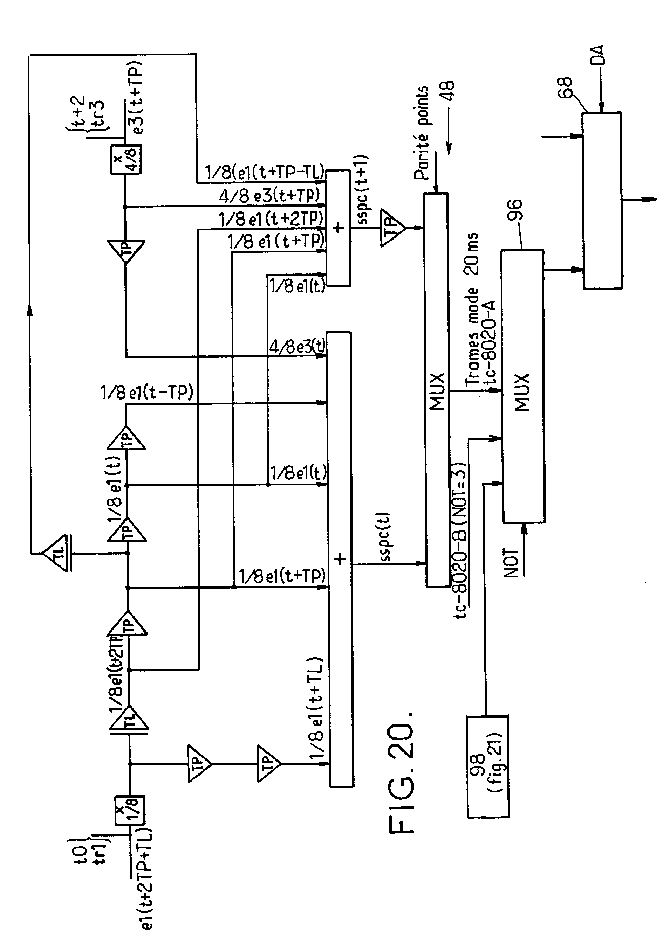

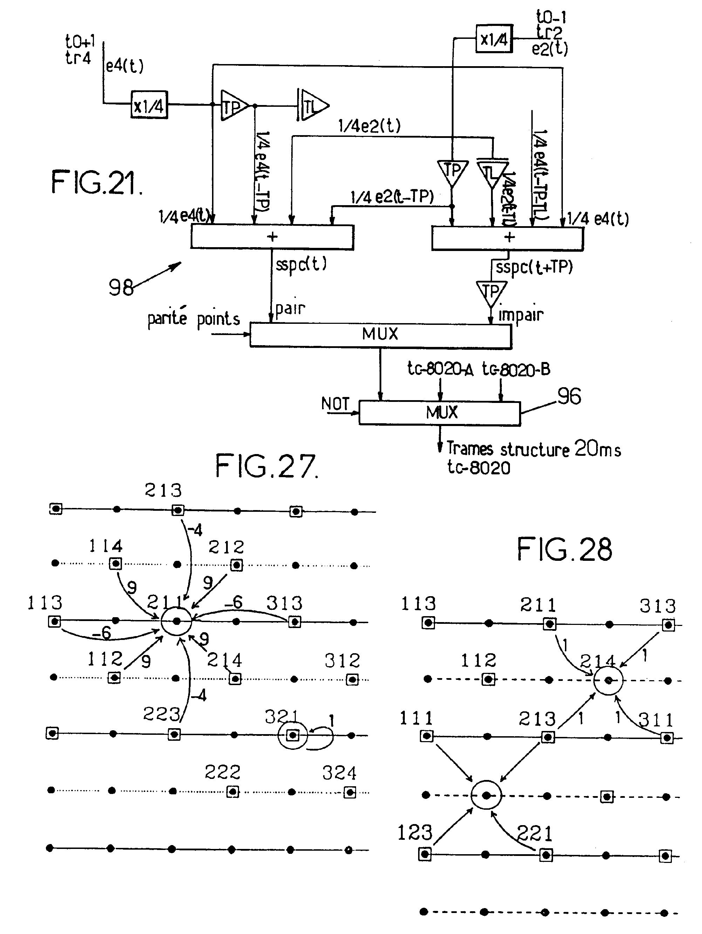

Le convertisseur 48 peut avoir la constitution montrée en Figures 20 et 21 qui comprend trois branches, dont les sorties sont reliées aux entrées d'un multiplexeur 96 qui oriente vers la sortie l'une des trois entrées, suivant le numéro d'ordre de trame NOT.

Une première branche, montrée en détail sur la Figure 20, génère les échantillons lorsque le numéro d'ordre de la trame courante NOT vaut 1 ou 2. Dans ce cas, chaque échantillon est superposable à un échantillon de la trame haute définition. L'échantillon de sortie est généré en effectuant la moyenne de l'échantillon de la trame courante avec quatre échantillons voisins dans l'image haute définition, provenant de la trame tr1. Dans le mode de réalisation montré en Figure 20, les coefficients de pondération sont de 0,5 pour la trame tr3, 0,125 pour les quatre points voisins de la trame tr1.

La Figure 21 montre la branche 98 destinée à traiter les échantillons d'une trame courante pour laquelle NOT = 3. L'interpolation s'effectue alors à partir des quatre points voisins disponibles, appartenant aux trames tr2 et tr4. Dans le cas illustré sur la Figure 21, les coefficients d'interpolation sont les mêmes pour les quatre points et égaux à 0,25.

La troisième branche, qui n'est pas représentée car sa constitution peut être très similaire à celle des branches montrées en Figures 20 et 21, traite les trames courantes (c'est-à-dire tr3) pour lesquelles NOT = 4. Les échantillons sont alors générés par interpolation à partir de quatre points voisins disponibles de la trame courante tr3, avec un coefficient de pondération égal à 0,125, et interpolation horizontale des deux points voisins de la trame tr4, avec un coefficient de pondération égal à 0,25. L'interpolation à partir des quatre points voisins s'effectue avec un schéma qui peut être le même que celui montré en Figure 21.

Les échantillons de trame en mode 20 ms fournis par le multiplexeur 96 sont appliqués au multiplexeur 68 et ce dernier fournit soit la sortie du convertisseur 48, soit la trame courante tr3, suivant les données d'assistance, pour constituer le signal tc20 (Figure 13) constituant la trame convertie en 20 ms.

### Sous-ensembles convertisseurs vers le mode 40 ms

Ces sous-ensembles 38, 40 et 42 (Figure 13) doivent fournir deux ou quatre trames de type 2, selon la parité du numéro d'ordre de trame courante NOT. La conversion doit pouvoir être effectuée, soit à partir du mode 80 ms, soit à partir du mode 20 ms.

La conversion 20 → 40 est la même quelle que soit la parité du numéro d'ordre de trame courante NOT (pair ou impair ; au contraire, la conversion 80 → 40 est fonction de cette parité et est fonction de la position de la trame à calculer par rapport à la trame courante, ce qui exige de prévoir trois blocs différents pour la conversion 80 → 40.

La conversion 80 → 40 dans CSE1 met en oeuvre des blocs appartenant aux sous-ensembles 38, 40 et 42, affectés des nombres 8040, rappelant la conversion effectuée, suivi de chiffres indiquant le numéro des trames traitées.
1. Les blocs destinés à traiter les trames pour lesquelles NOT est impair n'ont à calculer que deux trames seulement de type 2 (40 ms), en phase temporelle avec les trames tr2 et tr3. Le calcul des échantillons manquants des deux trames en mode 40 ms nécessaires à l'interpolation 40 ms effectuée par l'interpolateur de reconstruction 30 (Figure 12) s'effectue à partir de trois ou quatre trames mémorisées.

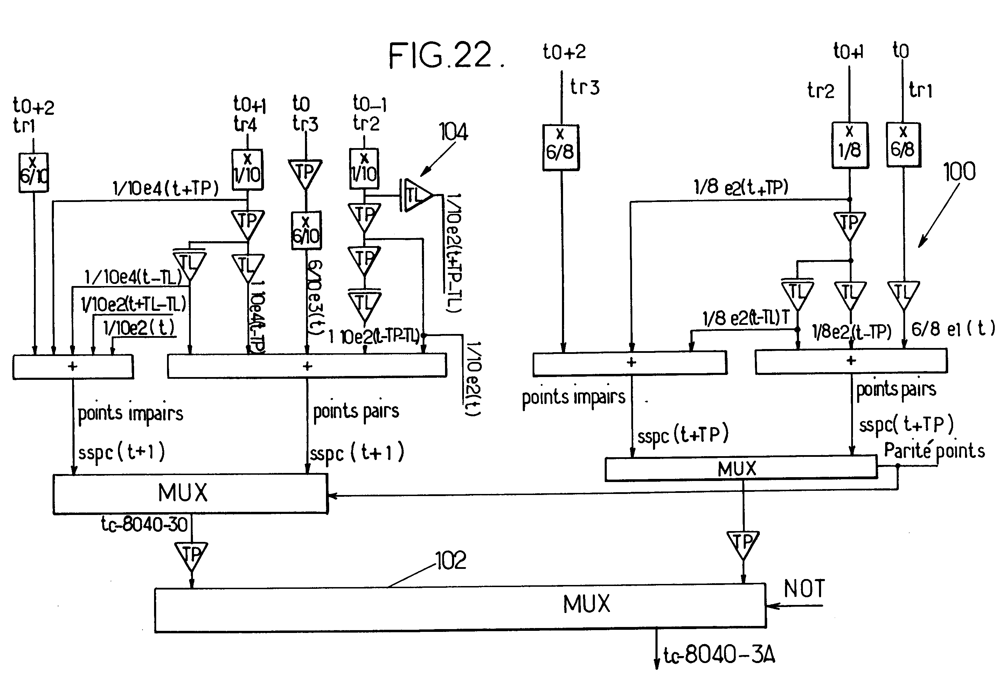

   La Figure 22 montre, à titre d'exemple, la génération du signal tc-8040-3A par le bloc 8040-23 dans le sous-ensemble 40 ; le circuit de calcul correspondant comporte deux branches attaquant un multiplexeur commandé par le numéro d'ordre de trame.
   Si NOT = 1, la branche 100 dont la sortie tc-8040-3b est sélectionnée par le multiplexeur 102. La branche utilise des échantillons d'entrée provenant des trois trames tr1, tr2, tr3.
   Si NOT = 3, la branche 104 calcule les échantillons nécessaires à partir des quatre trames tr1, tr2, tr3 et tr4.
   Un autre bloc (non représenté en détail), similaire à celui de la Figure 22, permet d'obtenir les trames tc-8040-2a et tc-8040-2b, permettant d'obtenir le signal de sortie tc-8040-2B.
   En résumé, on voit que : si NOT est impair, deux trames en mode 2 sont calculées à partir de trois ou quatre trames mémorisées.
2. Pour les trames dont NOT est pair, deux fois deux trames en mode 40 ms sont calculées.

Pour cela, CSE1 doit calculer deux trames 40 ms à partir de deux trames seulement mémorisées, en utilisant :
- les trames tr1 et tr2 en mémoire pour produire les trames en mode 40 ms de type tc-8040-1 et tc-8040-2A (sous-ensemble 38 de la Figure 13, et
- les trames tr3 et tr4 en mémoire pour produire les trames en mode 40 ms de type tc-8040-3B et tc-8040-4 (sous-ensemble 42 de la Figure 13).

Le bloc de génération des trames doit pratiquement comporter quatre branches.

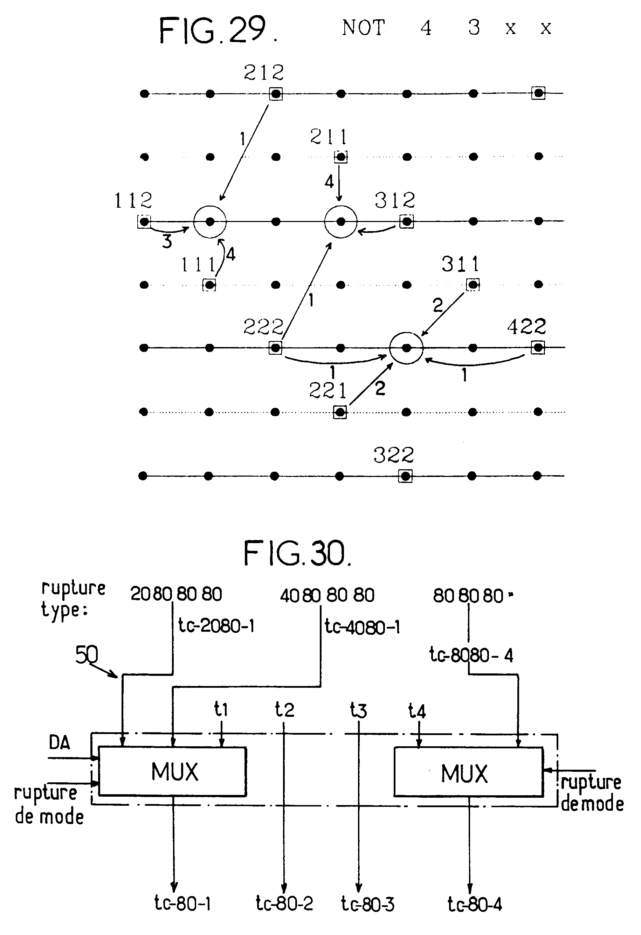

Deux des branches, incorporées au bloc 46 ou 8040-12 de la Figure 13, sont destinées à produire les deux trames en phase temporelle avec les trames tr1 et tr2.
- Si NOT = 2, la branche produit deux trames en mode 40 ms, tc-8040-1b et tc-8040-2b à partir des trames tr1 et tr2.
- Si NOT = 4, la branche produit deux trames en mode 40 ms, tc-8040-1a et tc-8040-2a, à partir des trames tr1 et tr2. Un mode de filtrage possible par interpolation est schématisé sur la Figure 29.

Les deux autres branches, incorporées au bloc 8040-34 de la Figure 13, produisent les deux trames en phase temporelle avec les trames tr3 et tr4.
- Si NOT = 2, la branche correspondante fournit deux trames en mode 40 ms, tc-8040-3a et tc-8040-4a à partir des trames tr3 et tr4.
- Si NOT = 4, la branche correspondante fournit deux trames en mode 40 ms, tc-8040-3b et tc-8040-4b à partir des trames tr3 et tr4.

La sélection entre la sortie des diverses branches s'effectue à l'aide de multiplexeurs 106 et 108.

Les circuits mis en oeuvre peuvent être du même genre que ceux montrés en Figure 22, modifiés pour remplir les fonctions ci-dessus. Dans chaque cas, la constitution détaillée des circuits peut aisément être établie une fois les coefficients de pondération choisis.

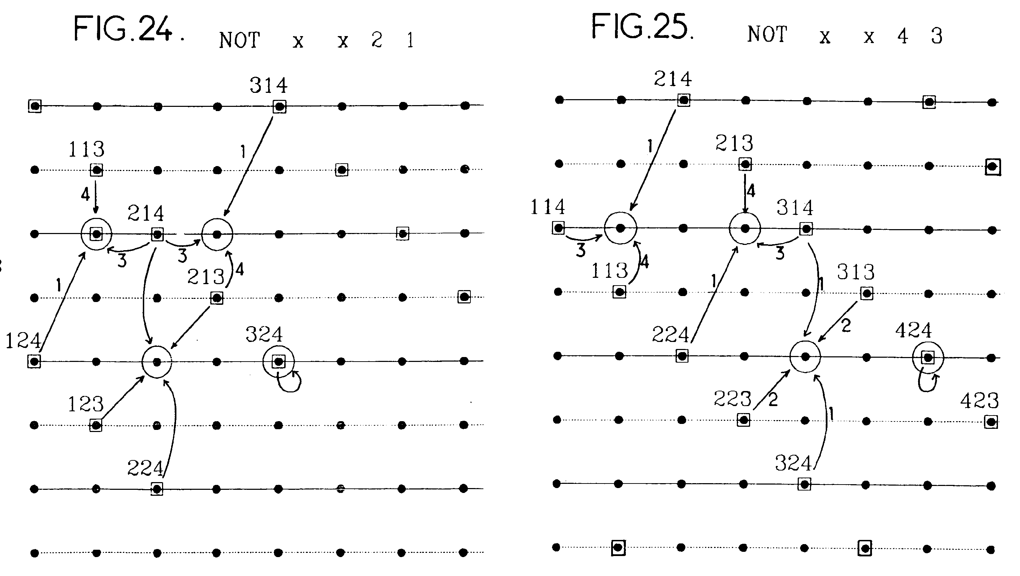

A titre d'exemple, les Figures 24 et 25 indiquent, sous forme non-normalisée, les coefficients de pondération qui peuvent être adoptés pour la production des trames en phase temporelle avec les trames tr3 et tr4, respectivement pour NOT = 2 (Figure 24) et NOT = 4 et qui conditionnent les multiplexeurs du bloc 8040-34. Les échantillons de la trame haute définition sont indiqués par des points noirs. Chacun des points qui interviennent est désigné par un nombre de trois chiffres, le premier désignant le numéro de l'échantillon modulo 4 sur la ligne, le second le numéro de la ligne modulo 2, et le troisième le numéro de la mémoire MEM concernée. Les échantillons disponibles sont identifiés par un carré. Les échantillons à calculer sont identifiés par un cercle entourant le point correspondant.

La conversion 20 → 40 dans CSE1 est plus simple que la conversion 80 → 40, car elle est identique quel que soit NOT, pair ou impair. Elle est effectuée par les blocs 44 des sous-ensembles 38, 40 et 42 (Figure 13).

Quelle que soit la parité de trame, les deux trames en mode 40 ms nécessaire peuvent être calculées à partir d'une seule trame 20 ms de parité impaire, qui est soit la trame courante, soit la trame antérieure, suivant le cas.

Par exemple, pour NOT = 1 ou NOT = 3, la branche correspondante du bloc 44 ou 2040 de la Figure 13 peut avoir la constitution montrée en Figure 26. Dans ce cas, le circuit 110 :
- soit utilise le point courant (le premier point en haut et à gauche de la trame étant superposable à un point de la trame en mode 40 ms),
- soit interpole le point final à partir des quatre points voisins dans la trame courante, avec des coefficients de pondération égaux, ce qui revient à faire la moyenne de ces quatre points.

Pour NOT = 2 ou NOT = 4, on peut interpoler les points finals à partir des quatre points voisins de la trame antérieure, cette fois en utilisant des coefficients de pondération différents selon les points (par exemple 5 pour le point le plus proche, 1 pour chacun des trois autres). Ce calcul peut être fait par un circuit 112 (Figure 26), similaire à celui déjà décrit.

Un multiplexeur 114 fournit les deux trames finales de la forme tc-2040-n, avec n = 1, 2, 3 ou 4.

Enfin, comme le montre la Figure 13, des multiplexeurs commandés par les données d'assistance permettent de fournir aux interpolateurs 72 et 74 (interpolateur A et interpolateur B) du circuit 30 de reconstruction en mode 40 ms par interpolation, les trames nécessaires, sous la forme désignée par :
tc-40-1A
tc-40-2A
tc-40-1B
tc-40-2B
sur la Figure 13.

### Sous-ensembles convertisseurs vers le mode 80 ms

Les échantillons en mode 80 ms sont générés dans CSE1 par le sous-ensemble 50. La constitution de ce dernier doit lui permettre d'effectuer :
- d'une part une conversion, qu'on peut qualifier de spatiale, du mode 20 ms vers le mode 80 ms,
- d'autre part une conversion qu'on peut qualifier de temporelle, consistant à générer les quatres trames 80 ms nécessaires pour reconstituer l'image HD à partir des trames de transmission disponibles, lorsque certaines seulement sont en mode 80 ms.

### Conversion spatiale :

La conversion 20 → 80 est effectuée par le bloc 52 du sous-ensemble 50 de CSE1 (bloc 2080 sur la Figure 13).

La constitution du bloc 52 peut être simple, car les structures 1 et 3, correspondant aux modes 20 et 80 ms, sont superposables. Les échantillons des trames en mode 80 ms pour lesquelles NOT=1 et NOT=2 sont directement disponibles.

Les échantillons des deux autres trames, pour lesquels NOT=3 et NOT=4, sont calculés par interpolation avec des coefficients de pondération égaux :
- à partir des échantillons voisins des trames mémorisées tr3 ou tr4 avec OU EXCLUSIF si NOT est pair,
- à partir des échantillons voisins des trames mémorisées tr2 ou tr3 si NOT est impair.

En résumé, on obtient toujours les échantillons de quatre trames de type 80 ms à partir de deux trames 20 ms :
- si NOT=1, les quatre trames sont calculées à partir de tr3 et tr2,
- si NOT=2, les quatres trames sont calculées à partir de tr3 et tr4,
- si NOT=3, les quatres trames sont calculées à partir de tr3 et tr2
- si NOT=4, les quatres trames sont calculées à partir de tr3 et tr4.

La simplicité des circuits d'interpolation à mettre en oeuvre est telle qu'il n'est pas nécessaire de les décrire ici.

### Conversion temporelle :

La conversion dite temporelle 80 → 80 en cas de rupture de mode 80 ms est celle qui est le plus complexe à traiter.

Il n'est possible d'obtenir les échantillons des quatre trames de 80 ms nécessaires en ne mettant en oeuvre que trois mémoires MEMT1, MEMT2 et MEMT3 que grâce à la présence de CSE2, prévu pour fournir quatre trames en mode 80 ms, désignées trm-80-n (avec n=1, 2, 3 ou 4), qui permettent de gérer les ruptures de mode * * 80 80 (chaque * désignant une trame manquante en mode 80 ms).

Les ruptures de mode 80 ms se produisent au début ou à la fin de périodes d'échantillonnage à 80 ms d'un bloc. Ces ruptures sont détectées par un module (non représenté) opérant sur les données d'assistance mémorisées dans le registre 58 (Figure 13). Le module détecte, pour chaque bloc d'échantillons, si le mode courant est 80 ms. Par comparaison avec les trois autres trames disponibles du bloc d'échantillons situé au même emplacement, il identifie les ruptures de mode.

L'information ainsi obtenue permet de sélectionner une des branches de traitement dans le bloc 54 de conversion 80 → 80. Ces branches sont affectées aux trois cas types de rupture de mode qui peuvent se présenter :
Rupture de type 1 : * 80 80 80, pour laquelle les trames successives disponibles sont toujours des trames ayant pour NOT 1, 4, 3 et 2.
Rupture de type 2 : * * 80 80, pour laquelle les trames successives disponibles sont des trames ayant pour NOT 2, 1, 4 et 3.
Rupture de type 3 : 80 80 80 *, pour laquelle les trames successives disponibles sont des trames ayant pour NOT 3, 2, 1 et 4.

Dans chaque cas, la branche appropriée doit calculer, pour un bloc d'échantillons disponible en mode 80 ms sur la trame courante tr3 à l'instant t0, les trois autres trames en mode 80 ms de l'image haute définition du bloc.
**1°)** La branche de traitement des ruptures de type 1 doit pouvoir traiter deux cas, celui d'une configuration 20 80 80 80 et celui d'une configuration 40 80 80 80.
   Dans les deux cas, les points manquants sont calculés par interpolation ou calcul de moyenne à partir des points voisins de quatre trames. Seuls les échantillons de la trame en phase temporellement avec la trame tr1 disponible sont à calculer.
   - Dans le cas d'une rupture de type 20 80 80 80, tous les échantillons sont en principe disponibles, car les structures 1 et 3 sont superposables pour NOT=1.
      Cependant, un filtrage est avantageusement effectué par pondération en affectant par exemple le coefficient de pondération 8 à l'échantillon de la trame courante, et le coefficient de pondération 1 à chacun des deux points proches de la trame tr2 et de la trame tr4.
   - Dans le cas d'une rupture de type 40 80 80 80, les échantillons de la trame manquante ne sont pas directement disponibles en totalité.

   Le calcul est effectué à partir des quatres trames de transmission disponibles tr1, tr2, tr3 et tr4.
   Comme le montre la Figure 27, où les notations utilisées sont encore les mêmes que sur les Figures 24 et 25, le premier échantillon en haut et à gauche d'un bloc est commun aux structures 2 et 3 : le calcul à effectuer est donc le même que dans le cas 20 80 80 80 et le circuit de calcul utilisé pour les ruptures de type 20 80 80 80 peut également être utilisé pour fournir les points impairs en cas de rupture de type 40 80 80 80. En fait on utilise le point tel quel, sans moyenne avec le voisinage.
   On dispose ainsi d'un point sur deux ; l'autre point est calculé par interpolation à partir des quatre trames sources disponibles, par exemple en affectant :
   - 2,54/4 aux quatre points voisins des trames 2 et 4 ;
   - 0,25/4 aux deux points voisins de la trame 1 dans le sens vertical ;
   - 0,375/4 aux deux points voisins de la trame 3 dans le sens horizontal.

   En normalisant par 16, les coefficients deviennent 9, -4 et -6. Pour tenir compte de la complexité matérielle on peut utiliser les jeux de coefficients suivants : 6 pour les 4 voisins de t2 et t3 et -4 pour les deux voisins horizontaux de t3 (normalisation par 16).
   Un multiplexeur (non représenté) est prévu pour fournir le signal qui est effectivement à utiliser, en fonction des données d'assistance et de l'information de rupture de bloc :
**2°)** Dans le cas d'une rupture de type 3, c'est-à-dire 80 80 80 *, les NOT des trames disponibles sont, dans l'ordre, 3 2 1 et 4. Seuls les échantillons de la trame manquante, pour laquelle NOT=4, sont à calculer.
   Le calcul est encore très simple. Il peut s'effectuer par moyenne entre les quatre échantillons disponibles adjacents, comme indiqué sur la Figure 28.
**3°)** Le traitement des ruptures de type 2, c'est-à-dire * * 80 80, exigerait, si on utilisait un mode classique de calcul, de disposer d'une trame mémorisée supplémentaire au moins, donc une mémoire MEMT de plus.

Cette nécessité est écartée, dans le dispositif suivant l'invention, en utilisant le résultat fourni par l'interpolateur 72 de type A (Figure 14), qui fournit une trame 40 ms haute définition obtenue par interpolation.

Ainsi, on peut se dispenser de calculer les échantillons 80 ms manquants, en substituant à ce calcul le résultat intermédiaire obtenu dans le montage semi-cascadé.

La Figure 30, où les notations sont similaires à celles de la Figure 13, montre comment s'effectue le multiplexage des signaux de sortie fournis par les diverses branches du sous-ensemble 50 pour fournir l'ensemble des trames de transmission nécessaires à une image en mode 80 ms. L'invention est susceptible de nombreuses variantes de réalisation.

En particulier, pour éviter le risque de papillotement dû à une augmentation brutale de définition lorsqu'on passe en mode 80 ms et à la diminution brutale de résolution lorsque cesse le mode 80 ms, un filtrage est avantageusement effectué sur la dernière trame complète échantillonnée en mode 80 ms avant passage en mode 80 ms et la dernière trame en mode 80 ms avant retour à un autre mode. Ce filtrage peut consister en une opération de moyenne pondérée sur les points de la dernière trame, utilisant les points adjacents de cette trame de type 80 ms.

Toujours pour éviter le risque de papillotement si une seule image complète à 80 ms subsiste entre des images à résolution plus réduite, une mémoire supplémentaire de données d'assistance peut être prévue pour commander le multiplexage et laisser l'image en basse résolution si un groupe de quatre trames d'analyse 80 ms est isolé entre deux groupes de trames en mode 20 ou 40 ms.

Les modes d'interpolation qui ont été donnés ne constituent que des exemples. La compensation de mouvement n'a été décrite que dans le cas où elle est appliquée au mode 40 ms, mais elle peut être également appliquée au mode 80 ms. Les coefficients de pondération peuvent être différents de ceux donnés.

Par ailleurs, l'invention a été décrite dans son application aux échantillons de chrominance. Les problèmes de défilement ou de saccade étant beaucoup moins importants en matière de chrominance qu'en matière de luminance, certains des défauts écartés par les solutions exposées plus haut peuvent être tolérés.

Cependant, la gestion des ruptures de mode 80 ms reste nécessaire pour éviter de voir apparaître des franges aux frontières entre blocs d'échantillons transmis en modes différents. Les oscillations en cas de passage d'un mode à un autre dans le temps sont moins visibles à l'oeil et peuvent généralement être négligées.

Une solution possible, en matière de chrominance, consiste à retenir uniquement un mode 20 ms et un mode 40 ms. Cependant, il serait possible, sans augmenter de façon notable la complexité et donc sans un coût supplémentaire élevé, d'utiliser trois modes 80 ms, 40 ms et 20 ms.

Le codage en mode 40 ms utilise la solution du saut de trame. A la réception, deux mémoires de trame vidéo couleur sont utilisées afin de fournir simultanément deux trames transmises consécutives, comme dans le cas de la luminance.

Un multiplexeur constituant un commutateur double permet de sélectionner la trame précédente ou la trame suivante par rapport à la trame courante et d'aiguiller correctement les trames vidéo paire et impaire. Le circuit est précédé d'un élément donnant un retard de plusieurs lignes, compensant la différence entre les retards dûs à la plus grande complexité du décodage de la luminance.

Les informations provenant des deux mémoires de trame sont dirigées vers des mémoires de lignes, d'une part pour la branche 40 ms (trame paire et impaire), d'autre part pour la branche 20 ms (trame courante).

Des interpolateurs permettent de déterminer la chrominance des échantillons :
- deux interpolateurs verticaux reconstruisent les lignes manquantes pour U et V, le choix de l'interpolateur est en fonction des données d'assistance et de la parité trame,
- des interpolateurs horizontaux calculent un point sur deux (le point manquant) pour générer les signaux U et V à 720 points / par ligne.

Les mémoires de trame peuvent avoir une capacité plus réduite que dans le cas de la luminance, par exemple de 360 points pour 312 lignes au lieu de 720 points pour 312 lignes.

En général, le mode de transmission choisi sera le même pour la luminance et la chrominance dans un bloc donné ; un seul circuit de reconnaissance est donc nécessaire dans le codeur : il utilise par exemple un critère de minimum de la somme des carrés des écarts.

## Revendications

1. Dispositif de décodage de programmes de télévision haute définition diffusés sur canal étroit, provenant d'un codeur à sous-échantillonnage, fournissant des échantillons répartis suivant une structure (S3) quinconce-ligne sur quatre trames, une structure (S1) retenant un point sur deux de la structure quinconce-ligne sur quatre trames et une structure (S2) à saut de trame, l'image étant fractionnée en blocs d'échantillons pouvant être répartis suivant des structures différentes, le dispositif comportant, au moins pour les échantillons de luminance, des moyens (MEMT1, MEMT2, MEMT3) de mémorisation de trois trames de transmission successives, permettant de disposer de quatre trames de transmission (tr1, tr2, tr3, tr4), des moyens permettant de reconstituer les échantillons manquants et des moyens de mélange des résultats obtenus pour fournir une image complète haute définition,
caractérisé en ce que lesdits moyens permettant de reconstituer les échantillons comprennent:
- un premier convertisseur de structure d'échantillonnage (CSE1) recevant la trame de transmission courante (tr3) ainsi qu'une trame antérieure (tr4) et deux trames ultérieures (tr1, tr2) de transmission et fournissant en sortie une trame complète en structure (S1), au moins deux trames complètes successives en structure (S2) et quatre trames complètes successives en structure (S3), sous forme sous-échantillonnée ;
- un circuit (30) d'interpolation selon la structure (S2) à saut de trame, reconstituant la trame complète haute définition en structure (S2) à partir de la sortie du premier convertisseur :
- un second convertisseur de structure d'échantillonnage (CSE2) recevant les échantillons de la trame en structure (S2) à saut de trame provenant du circuit interpolateur et reconstituant, - à partir de la trame haute définition en structure (S2) à saut de trame reconstituée, des quatre trames complètes en structure (S3) et d'une trame en structure (S3) - des trames sous-échantillonnées en structure (S1) et (S3) représentant les blocs de la trame courante ;
- deux circuits interpolateurs supplémentaires (32, 34) travaillant en parallèle et fournissant, à partir des échantillons en structures (S1) et (S3) fournis par le second convertisseur de structure d'échantillonnage, tous les échantillons d'une trame haute définition reconstruite en structure (S1) et (S3) ;
- et en ce que un multiplexeur, appartenant aux moyens de mélange, fournit l'image haute définition définitive par sélection de blocs dans les trames reconstruites, en fonction de données d'assistance (DA) reçues du codeur.

2. Dispositif selon la revendication 1, caractérisé en ce que le premier convertisseur de structure d'échantillonnage (CSE1) comprend :
- trois sous-ensembles convertisseurs (38,40,42) vers la structure (S2) à saut de trame, à partir des deux autres structures, sélectionnés en fonction des données d'assistance,
- un sous-ensemble convertisseur (48) vers la structure (S1), retenant un point sur deux de la structure (S3) quinconce-ligne sur quatre trames,
- et un sous-ensemble convertisseur (50) vers la structure (S3) quinconce-ligne sur quatre trames permettant de gérer les ruptures temporelles de structures quinconce-ligne sur quatre trames.

3. Dispositif selon la revendication 2, caractérisé en ce que l'un des sous-ensembles convertisseurs (38) vers la structute (S2) à saut de trame comprend un convertisseur (46) à partir de la structure quinconce-ligne sur quatre trames et un convertisseur (44) à partir de la structure (S1) retenant un point sur deux et est constitué de façon à fournir soit une trame provenant d'un des convertisseurs (44,46), soit une trame courante, à un premier interpolateur (72) du circuit d'interpolation (30).

4. Dispositif selon la revendication 3, caractérisé en ce que chacun des autres sous-ensembles convertisseurs (40,42) vers la structure (S2) à saut de trame comprend un convertisseur (46) a partir de la structure quinconce-ligne sur quatre trames et un convertisseur (44) à partir de la structure (S1) retenant un point sur deux et est constitué de façon à fournir des blocs en structure à saut de trame à un second interpolateur (74) du circuit d'interpolation (30).

5. Dispositif selon la revendication 4, caractérisé en ce que le second interpolateur (74) est un interpolateur spatial de reconstitution de trames haute définition à partir de deux trames successives en structure (S2) à saut de trame et attaque un interpolateur (76) dans le sens vertical.

6. Dispositif selon l'une quelconque des revendications 3 à 5 caractérisé en ce que le premier interpolateur(72) est un interpolateur de reconstitution de trames haute définition attaquant un circuit (78) de compensation de mouvement.

7. Dispositif selon l'une quelconque des revendications 3 à 6, caractérisé en ce que le second convertisseur (CSE2) est constitué de façon à fournir, a partir de trames haute définition reconstruites en structure (S2) à saut de trame et du résultat de l'interpolation effectuée par le premier interpolateur (72), des signaux de rupture du mode correspondant à la structure quinconce-ligne sur quatre trames et des signaux en structure (S1) retenant un point sur deux, échantillonnés à partir des résultats de la reconstruction.

## Patentansprüche

1. Vorrichtung zur Dekodierung von in schmalem Kanal gesendeten Fernsehprogrammen hoher Auflösung, welche von einem Kodierer mit Unter-Abtastung kommen, welcher Abtastwerte liefert, die gemäß einer Struktur (S3) mit Fünfer-Zeilenanordnung in vier Teilbildern, einer jeden zweiten Punkt der Struktur mit Fünfer-Zeilenanordnung in vier Teilbildern behaltenden Struktur (S1) und einer Teilbildsprungstruktur (S2) verteilt sind, wobei das Bild in Blöcke von Abtastwerten zerlegt ist, welche gemäß den unterschiedlichen Strukturen verteilt sein können, wobei die Vorrichtung wenigstens für die Luminanzabtastwerte Mittel (MEMT1, MEMT2, MEMT3) zur Speicherung von drei aufeinanderfolgenden Übertragungsteilbildern, welche Mittel es gestatten, über vier Übertragungsteilbilder (tr1, tr2, tr3, tr4) zu verfügen, Mittel, welche es gestatten, die fehlenden Abtastwerte zu rekonstruieren, und Mittel zum Mischen der erzielten Resultate umfaßt, um ein vollständiges Bild hoher Auflösung zu liefern,
dadurch gekennzeichnet, daß die Mittel, welche eine Rekonstruktion der Abtastwerte gestatten, umfassen
einen ersten Abtaststrukturumwandler (CSE1), welcher das aktuelle Übertragungsteilbild (tr3) und ein vorhergehendes Übertragungsteilbild (tr4) und zwei spätere Übertragungsteilbilder (tr1, tr2) empfängt und als Ausgabe ein vollständiges Teilbild mit Struktur (S1), wenigstens zwei aufeinanderfolgende, vollständige Teilbilder mit Struktur (S2) und vier aufeinanderfolgende, vollständige Teilbilder mit Struktur (S3) in unter-abgetasteter Form liefert;
eine Interpolationsschaltung (30) gemäß der Teilbildsprungstruktur (S2), welche das vollständige Teilbild hoher Auflösung mit Struktur (S2) aus der Ausgabe des ersten Umwandlers rekonstruiert;
einen zweiten Abtaststrukturumwandler (CSE2), welcher die Abtastwerte des von der Interpolationsschaltung kommenden Teilbilds mit Teilbildsprungstruktur (S2) empfängt und - aus dem rekonstruierten Teilbild hoher Auflösung mit Teilbildsprungstruktur (S2), den vier vollständigen Teilbildern mit Struktur (S3) und einem Teilbild mit Struktur (S3) - mit Struktur (S1) und (S3) unter-abgestastete Teilbilder rekonstruiert, welche den Blöcken des aktuellen Teilbilds entsprechen;
zwei Zusatzinterpolationsschaltungen (32, 34), welche parallel arbeiten und aus von dem zweiten Abtaststrukturumwandler gelieferten Abtastwerten mit Strukturen (S1) und (S3) alle Abtastwerte eines rekonstruierten Teilbilds hoher Auflösung mit Struktur (S1) und (S3) liefern;
und daß ein zu den Mischungsmitteln gehörender Multiplexer das endgültige Bild hoher Auflösung durch Auswahl von Blöcken in den rekonstruierten Teilbildern als Funktion von Hilfsdaten (DA) liefert, welche von dem Kodierer kommend empfangen werden.

2. Vorrichtung nach Anspruch 1, dadurch gekennzeichnet, daß der erste Abtaststrukturumwandler (CSE1) umfaßt:
drei Umwandler-Untereinheiten (38, 40, 42) in die Teilbildsprungstruktur (S2) aus zwei anderen Strukturen, welche als Funktion der Hilfsdaten ausgewählt sind,
eine Umwandler-Untereinheit (48) in die Struktur (S1), welche jeden zweiten Punkt der Struktur (S3) mit Fünfer-Zeilenanordnung in vier Teilbildern behält,
eine Umwandler-Untereinheit (50) in die Struktur (S3) mit Fünfer-Zeilenanordnung in vier Teilbildern, welche es gestattet, die zeitlichen Unterbrechungen der Strukturen mit Fünfer-Zeilenanordnung in vier Teilbildern zu verwalten.

3. Vorrichtung nach Anspruch 2, dadurch gekennzeichnet, daß eine der Umwandler-Untereinheiten (38) in die Teilbildsprungstruktur (S2) einen von der Struktur mit Fünfer-Zeilenanordnung in vier Teilbildern ausgehenden Umwandler (46) und einen von der jeden zweiten Punkt behaltenden Struktur (S1) ausgehenden Umwandler (44) umfaßt und derart ausgebildet ist, daß sie einem ersten Interpolator (72) der Interpolationsschaltung (30) entweder ein von einem der Umwandler (44,46) kommendes Teilbild oder ein aktuelles Teilbild liefert.

4. Vorrichtung nach Anspruch 3, dadurch gekennzeichnet, daß jede der anderen Umwandler-Untereinheiten (40, 42) in die Teilbildsprungstruktur (S2) einen von der Struktur mit Fünfer-Zeilenanordnung in vier Teilbildern ausgehenden Umwandler (46) und einen von der jeden zweiten Punkt behaltenden Struktur (S1) ausgehenden Umwandler (44) umfaßt und derart ausgebildet ist, daß sie einem zweiten Interpolator (74) der Interpolationsschaltung (30) Blöcke mit Teilbildsprungstruktur liefert.

5. Vorrichtung nach Anspruch 4, dadurch gekennzeichnet, daß der zweite Interpolator (74) ein räumlicher Interpolator zur Rekonstruktion von Teilbildern hoher Auflösung aus zwei aufeinanderfolgenden Teilbildern mit Teilbildsprungstruktur (S2) ist und einen Interpolator (76) in der Vertikalrichtung ansteuert.

6. Vorrichtung nach nach einem der Ansprüche 3 bis 5, dadurch gekennzeichnet, daß der erste Interpolator (72) ein Interpolator zur Rekonstruktion von Teilbildern hoher Auflösung ist, welcher eine Bewegungskompensationsschaltung (78) ansteuert.

7. Vorrichtung nach einem der Ansprüche 3 bis 6, dadurch gekennzeichnet, daß der zweite Umwandler (CSE2) derart ausgebildet ist, daß er von rekonstruierten Teilbildern hoher Auflösung mit Teilbildsprungstruktur (S2) und von dem Resultat der durch den ersten Interpolator (72) durchgeführten Interpolation ausgehend der Struktur mit Fünfer-Zeilenanordnung in vier Teilbildern entsprechende Modusunterbrechungssignale und Signale mit jeden zweiten Punkt behaltender Struktur (S1) liefert, welche von den Resultaten der Rekonstruktion ausgehend abgetastet sind.

## Claims

1. A system for decoding high-definition television programmes broadcast on a narrow channel and originating from a sub-sampling encoder delivering samples distributed in a four-field line-stagger structure (S3), a structure (S1) retaining one dot out of two of the four-field line-stagger structure, and a field-skip structure (S2), the frame being divided into blocks of samples which may be distributed in different structures, the system comprising, at least for the luminance samples, memory means (MEMT1, MEMT2, MEMT3) for storing three successive transmission fields so as to give four transmission fields (tr1, tr2, tr3, tr4), means for reconstructing the missing samples and means for mixing the results obtained in order to deliver a complete high-definition frame,
characterised in that the said means for reconstructing the samples comprise:
- a first sampling structure converter (CSE1) which receives the current transmission field (tr3) and a prior transmission field (tr4) and two subsequent transmission fields (tr1, tr2) and which outputs a complete field in structure (S1), at least two successive complete fields in structure (S2) and four successive complete fields in structure (S3), in sub-sampled form;
- a circuit (30) for interpolation according to the field-skip structure (S2), which reconstructs the complete high-definition field in structure (S2) from the output of the first converter;
- a second sampling structure converter (CSE2) which receives the samples of the field in the field-skip structure (S2) originating from the interpolation circuit and which - from the reconstructed high-definition field in field-skip structure (S2), from the four complete fields in structure (S3) and from one field in structure (S3) - reconstructs sub-sampled fields in structure (S1) and (S3) representing the blocks of the current field;
- two supplementary interpolation circuits (32, 34) operating in parallel and delivering, from samples in structures (S1) and (S3) delivered by the second sampling structure converter, all the samples of a reconstructed high-definition field in structure (S1) and (S3);
- and in that a multiplexer belonging to the mixing means delivers the final high-definition frame by selection of blocks from the reconstructed fields in dependence on assistance data (DA) received from the encoder.

2. A system according to claim 1, characterised in that the first sampling structure converter (CSE1) comprises:
- three sub-assemblies (38, 40, 42) for converting to the field-skip structure (S2) from the other two structures selected in dependence on the assistance data,
- a sub-assembly (48) for converting to the structure (S1) retaining one dot out of two of the four-field line-stagger structure (S3),
- and a sub-assembly (50) for converting to the four-field line-stagger structure (S3) so as to provide management of time breaks in four-field line-stagger structures.

3. A system according to claim 2, characterised in that one of the sub-assemblies (38) for converting to the field-skip structure (S2) comprises a converter (46) for conversion from the four-field line-stagger structure and a converter (44) for converting from the structure (S1) retaining one dot out of two and is so devised as to deliver either a field originating from one of the converters (44, 46) or a current field to a first interpolator (72) of the interpolation circuit (30).

4. A system according to claim 3, characterised in that each of the other sub-assemblies (40, 42) for converting to the field-skip structure (S2) comprises a converter (46) for converting from the four-field line-stagger structure and a converter (44) for converting from the structure (S1) retaining one dot out of two and is so devised as to deliver blocks in field- skip structure to a second interpolator (74) of the interpolation circuit (30).

5. A system according to claim 4, characterised in that the second interpolator (74) is a space interpolator for reconstructing high-definition fields from two successive fields in field-skip structure (S2) and drives an interpolator (76) vertically.

6. A system according to any one of claims 3 to 5, characterised in that the first interpolator (72) is a high-definition field reconstruction interpolator driving a movement compensation circuit (78).

7. A system according to any one of claims 3 to 6, characterised in that the second converter (CSE2) is so devised as to deliver, from reconstructed high-definition fields in field-skip structure (S2) and from the result of the interpolation carried out by the first interpolator (72), four-field line-stagger structure mode break signals and signals in structure (S1) retaining one dot out of two, sampled from the results of the reconstruction.
